(19) Europäisches Patentamt
European Patent Office
Office européen des brevets

(11) **EP 3 701 434 B1**

(12) **EUROPÄISCHE PATENTSCHRIFT**

(45) Veröffentlichungstag und Bekanntmachung des Hinweises auf die Patenterteilung:
**11.12.2024 Patentblatt 2024/50**

(21) Anmeldenummer: **18795452.4**

(22) Anmeldetag: **24.10.2018**

(51) Internationale Patentklassifikation (IPC):
**G06N 3/082** *(2023.01)* **G06N 3/04** *(2023.01)*
**G06N 3/0985** *(2023.01)* G06N 3/084 *(2023.01)*
G06N 3/09 *(2023.01)*

(52) Gemeinsame Patentklassifikation (CPC):
**G06N 3/082; G06N 3/04; G06N 3/0985;**
G06N 3/084; G06N 3/09

(86) Internationale Anmeldenummer:
**PCT/EP2018/079088**

(87) Internationale Veröffentlichungsnummer:
**WO 2019/081545 (02.05.2019 Gazette 2019/18)**

(54) **VERFAHREN UND VORRICHTUNG ZUM AUTOMATISCHEN ERZEUGEN EINES KÜNSTLICHEN NEURONALEN NETZES**

METHOD AND APPARATUS FOR AUTOMATICALLY PRODUCING AN ARTIFICIAL NEURAL NETWORK

PROCÉDÉ ET DISPOSITIF DESTINÉS À PRODUIRE AUTOMATIQUEMENT UN RÉSEAU NEURONAL ARTIFICIEL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.10.2017 DE 102017219282**

(43) Veröffentlichungstag der Anmeldung:
**02.09.2020 Patentblatt 2020/36**

(73) Patentinhaber: **Robert Bosch GmbH**
**70442 Stuttgart (DE)**

(72) Erfinder:
• **METZEN, Jan Hendrik**
**71034 Boeblingen (DE)**
• **ELSKEN, Thomas**
**71069 Sindelfingen (DE)**
• **HUTTER, Frank**
**79110 Freiburg (DE)**

(56) Entgegenhaltungen:
**DE-U1- 202017 102 238**

• **RISTO MIIKKULAINEN ET AL: "Evolving Deep Neural Networks", ARXIV.ORG, CORNELL UNIVERSITY LIBRARY, 201 OLIN LIBRARY CORNELL UNIVERSITY ITHACA, NY 14853, 2 March 2017 (2017-03-02), XP080753649**
• **ILYA LOSHCHILOV ET AL: "SGDR: Stochastic Gradient Descent with Warm Restarts", 3 May 2017 (2017-05-03), arXiv.org, pages 1 - 16, XP055544449, Retrieved from the Internet <URL:https://arxiv.org/abs/1608.03983> [retrieved on 20190118]**

**Beschreibung**

Die Erfindung betrifft ein Verfahren zum automatischen Erzeugen eines künstlichen neuronalen Netzes ein Computerprogramm das Anweisungen umfasst, welche eingerichtet sind, das Verfahren auszuführen, wenn es auf einem Computer ausgeführt wird, ein maschinenlesbares Speichermedium, auf dem das Computerprogramm gespeichert ist und ein System, insbesondere umfassend einen oder mehrere Computer, das eingerichtet ist, das Verfahren auszuführen.

Stand der Technik

Aus "Reinforcement Learning for Architecture Search by Network Transformation", arXiv preprint arXiv:1707.04873v1, 2017, Han Cai, Tianyao Chen, Weinan Zhang, Yong Yu, Jun Wang ist ein Verfahren zum automatischen Erzeugen einer Architektur eines künstlichen neuronalen Netzes mittels bestärkendem Lernen (Englisch: *reinforcement learning*) bekannt, wobei das Netz unter Beibehaltung seiner Funktion vertieft oder verbreitert wird.

RISTO MIIKKULAINEN ET AL: "Evolving Deep Neural Networks", ARXIV.ORG, CORNELL UNIVERSITY LIBRARY, 201 OLINE LIBRARY CORNELL UNIVERSITY ITHACA, NY 14853, 2. März 2017 (2017-03-02), online abrufbar: htts://arxiv.org/pdf/1703.00548.pdf, schlägt eine automatisierte Methode, CoDeepNEAT, zur Optimierung tiefer Lernarchitekturen durch Evolution vor. Durch die Erweiterung bestehender Neuroevolutionsmethoden auf Topologie, Komponenten und Hyperparameter erzielt diese Methode Ergebnisse, die mit den besten menschlichen Entwürfen bei Standard-Benchmarks in der Objekterkennung und Sprachmodellierung vergleichbar sind
Ilya Loshchilov ET AL: "SGDR: Stochastic Gradient Descent with Warm Restarts", 3. Mai 2017 (2017-05-03), Seiten 1-16, arXiv.org, online abrufbar https://arxiv.org/abs/1608.03983, offenbart eine Warmstarttechnik für den stochastischen Gradientenabstieg, um seine Leistung jederzeit zu verbessern, wenn tiefe neuronale Netzwerke trainiert werden.

DE 20 2017 102238 U1 offenbart ein Aktorsteuerungssystem zum Steuern eines Aktors.

Vorteil der Erfindung

Das Verfahren nach Anspruch 1 hat demgegenüber den Vorteil, dass es einen sehr effizienten automatisierten Aufbau eines leistungsstarken vergrößerten künstlichen neuronalen Netzes ermöglicht.

Vorteilhafte Weiterbildungen sind Gegenstand der abhängigen Ansprüche.

Offenbarung der Erfindung

In einem ersten Aspekt betrifft die Erfindung ein Verfahren nach Anspruch 1.

Bei Modulen handelt es sich um Einheiten des neuronalen Netzes, die abhängig von einer (ggf. vektorwertigen) Eingangsgröße eine (ggf. vektorwertige) Ausgangsgröße ermittelt. Bei einem Modul kann es sich beispielsweise um eine Schicht des künstlichen neuronalen Netzes handeln, oder um künstliche Neurone.

D.h. "sukzessive" bedeutet, dass das Verfahren eine Mehrzahl von Durchgängen umfasst, wobei in jedem Durchgang mögliche Weiterbildungen ausgehend von dem aktuellen Ausgangsnetz erzeugt werden und hieraus dann eine, vorzugweise beste, Weiterbildung ausgewählt wird, um im nächsten Durchgang als aktuelles Ausgangsnetz zu dienen.

D.h. es werden wiederholt eine Mehrzahl möglicher Weiterbildungen gebildet, und aus diesen nur eine, vorzugsweise eine beste, Weiterbildung ausgewählt, die dann wiederum als Basis für weitere Weiterbildungen dient. Auf diese Weise wird das künstliche neuronale Netz Schritt für Schritt vergrößert. Es wurde erkannt, dass ein solches gieriges Vorgehen überraschenderweise in kurzer Zeit zu einem sehr leistungsstarken künstlichen neuronalen Netz führt, und nicht etwa in hemmende Nebenminima führt.

Beim Hinzufügen der jeweiligen Module und/oder Verbindungen werden vorgebbare Parameter, die die jeweiligen hinzuzufügenden Module und/oder Verbindungen charakterisieren, so gewählt, dass das Ausgangsnetz, dem die jeweiligen hinzuzufügenden Module und/oder Verbindungen hinzugefügt werden, für jede mögliche Eingangsgröße jeweils vor und nach dem Hinzufügen der jeweiligen hinzuzufügenden Module und/oder Verbindungen unveränderte Ausgangsgrößen liefert.

D.h. die entsprechenden Parameter der hinzuzufügenden Module und/oder Verbindungen werden so gewählt, dass das Ausgangsnetz und das durch Hinzufügen der hinzuzufügenden Module und/oder Verbindungen erweiterte Netz funktional äquivalent sind. Hierdurch werden die möglichen Weiterbildungen sehr viel schneller trainierbar, was das Verfahren beschleunigt

Zusätzlich kann vorgesehen sein, dass die möglichen Weiterbildungen des aktuellen Ausgangsnetzes jeweils mit einem Trainingsdatensatz trainiert werden, bevor dann die eine der Weiterbildungen aus der Mehrzahl möglicher Weiterbildungen ausgewählt wird, um als aktuelles Ausgangsnetz im nächsten Durchlauf des Verfahrens zu dienen.

Die Auswahl der einen Weiterbildung aus der Mehrzahl möglicher Weiterbildungen kann abhängig von einer Größe erfolgen, die eine jeweilige Leistungsfähigkeit eines jeden der Mehrzahl der möglichen Weiterbildungen charakterisiert. Diese Größe kann vorzugsweise abhängig von Ausgangsgrößen der jeweiligen einen Weiterbildung der Mehrzahl der Weiterbildungen gewählt werden.

In einer Weiterbildung dieses Aspekts kann vorgesehen sein, dass die Weiterbildungen des Ausgangsnetzes jeweils mit einem Gradientenabstiegsverfahren trainiert werden, wobei ein Parameter, der eine Lernrate des Gradientenabstiegsverfahrens charakterisiert, mit zunehmender Anzahl durchgeführter Trainingsepochen fallend gewählt wird.

D.h. die die Lernrate charakterisierende Größe wird so gewählt, dass sie mit zunehmender Lerndauer abfällt. Dies hat den Vorteil, dass das Gradientenabstiegsverfahren besonders schnell konvergiert. Es wurde nämlich erkannt, dass sich hierdurch Schwankungen in einem geschätzten Gradienten besonders zuverlässig entgegengewirkt werden kann.

Hierbei kann der fallende Verlauf des Parameters, der die Lernrate charakterisiert, mittels einer trigonometrischen Funktion charakterisiert ist.

Dies ist ein besonders einfacher Weg, um eine fallende Lernrate zu charakterisieren, die einen bevorzugten sanften Verlauf aufweist. Beispielsweise kann man die die Lernrate charakterisierende Größe $\propto \left(1 + \cos(\frac{t}{T}\pi)\right)$ wählen, wobei $t$ eine Trainingszeit (z.B. gemessen in Trainings-Epochen) bezeichnet und $T$ eine vorgebbare Gesamtzeit bezeichnet.

Es kann vorgesehen sein, dass nach einem der vorherigen Ansprüche, wobei die vorgebbare Mehrzahl möglicher Module und/oder Verbindungen ein Normierungsmodul und/oder eine Sprungverbindung (Englisch: *skip connection*) und/oder ein Modul, das eine nicht-lineare Funktion beinhaltet, umfasst, wobei die nicht-lineare Funktion für mindestens einen Wert eines ihr Verhalten charakterisierenden Parameters idempotent ist. Durch diese Bedingung der nicht-linearen Funktion lässt sich der charakterisierende Parameter so wählen, dass die nicht-lineare Funktion die Ausgangsgröße nicht verändert, wenn die idempotente Funktion unmittelbar vor oder nach der idempotenten Funktion bereits im Ausgangsnetz vorhanden ist.

Bei dem Normierungsmodul kann es sich beispielsweise um eine Schicht-Normierung (Englisch: *layer normalization*) oder um eine Stapel-Normierung (Englisch: *batch normalization*) handeln. Es wurde erkannt, dass sich diese Module effizient initialisieren lassen und durch ihre Aufnahme in die vorgebbare Mehrzahl möglicher Module besonders effizient leistungsfähige künstliche neuronale Netzwerke generiert werden können.

Insbesondere kann vorgesehen sein, dass die vorgebbare Mehrzahl möglicher Module und/oder Verbindungen den das Normierungsmodul und die Sprungverbindung und das die nicht-lineare Funktion beinhaltende Modul und ein eine lineare-Funktion beinhaltendes Modul und ein Modul beinhaltet, das eine bestehende lineare Schicht durch Hinzufügen von Einheiten bzw. Kanälen verbreitert und ein Modul beinhaltet, das eine lineare Schicht durch ein Duplizieren dieser linearen Schicht verbreitert.

Es hat sich gezeigt, dass sich mit dieser vorgebbaren Mehrzahl möglicher Module und/oder Verbindungen besonders effizient künstliche neuronale Netze generieren lassen.

In weiteren Aspekten betrifft die Erfindung ein Computerprogramm nach Anspruch 7.

In noch weiteren Aspekten betrifft die Erfindung ein maschinenlesbares Speichermedium nach Anspruch 8 sowie ein System nach Anspruch 9.

Nachfolgend werden Ausführungsformen der Erfindung unter Bezugnahme auf die beiliegenden Zeichnungen näher erläutert. In den Zeichnungen zeigen:

Figur 1 schematisch eine Einsatzmöglichkeit eines erfindungsgemäß erzeugten künstlichen neuronalen Netzes;

Figur 2 schematisch ein beispielhaftes Lernsystem zum Erzeugen eines künstlichen neuronalen Netzes;

Figur 3 in einem Flussdiagramm einen möglichen Ablauf eines Verfahrens zum Erzeugen eines künstlichen neuronalen Netzes.

Beschreibung der Ausführungsbeispiele

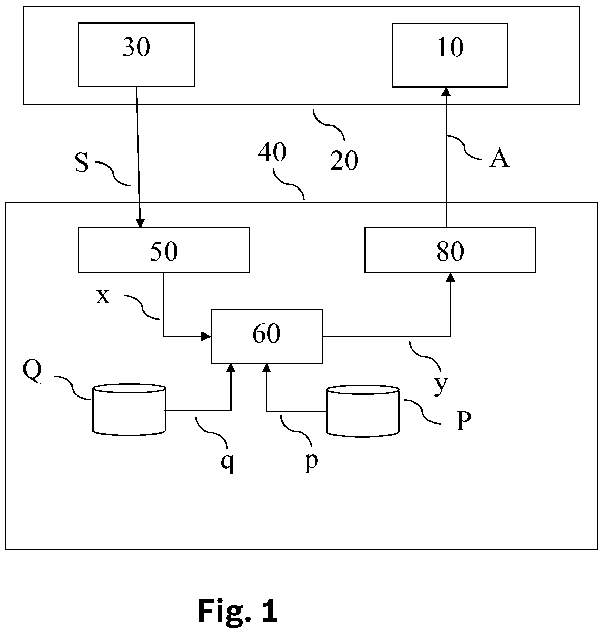

Figur 1 zeigt beispielhaft einen Aktor 10 in seiner Umgebung 20 in Interaktion mit einem Aktorsteuerungssystem 40. Aktor 10 und Umgebung 20 werden gemeinschaftlich nachfolgend auch als Aktorsystem bezeichnet. Ein Zustand des Aktorsystems wird mit einem Sensor 30 erfasst, der auch durch eine Mehrzahl von Sensoren gegeben sein kann. Ein Ausgangssignal S des Sensors 30 wird an das Aktorsteuerungssystem 40 übermittelt. Das Aktorsteuerungssystem 40 ermittelt hieraus ein Ansteuersignal A, welches der Aktor 10 empfängt.

Bei dem Aktor 10 kann es sich beispielsweise um einen (teil-)autonomen Roboter, beispielsweise ein (teil-)autonomes Kraftfahrzeug handeln. Bei dem Sensor 30 kann es sich beispielsweise um einen oder mehrere Videosensoren und/oder einen oder mehrere Radarsensoren und/oder einen oder mehrere Ultraschallsensoren und/oder einen oder mehrere Positionssensoren (beispielsweise GPS) handeln. Alternativ oder zusätzlich kann der Sensor 30 auch ein Informationssystem umfassen, das eine Information über einen Zustand des Aktorsystems ermittelt, wie beispielsweise ein Wetterinformationssystem, das einen aktuellen oder zukünftigen Zustand des Wetters in der Umgebung 20 ermittelt.

In einem anderen Ausführungsbeispiel kann es sich bei dem Aktor 10 um einen Fertigungsroboter handeln, und bei dem Sensor 30 dann beispielsweise um einen optischen Sensor handeln, der Eigenschaften von Fertigungserzeugnissen des Fertigungsroboters erfasst.

In einem weiteren Ausführungsbeispiel kann es sich bei dem Aktor 10 um ein Freigabesystem handeln, welches eingerichtet ist, die Aktivität eines Geräts freizugeben oder nicht. Bei dem Sensor 30 kann es sich beispielsweise um einen optischen Sensor (beispielsweise zur Erfassung von Bild- oder Videodaten) handeln, der eingerichtet ist, ein Gesicht zu erfassen. Der Aktor 10 ermittelt abhängig vom Ansteuersignal A ein Freigabesignal, das benutzt werden kann, um abhängig vom Wert des Freigabesignals das Gerät freizugeben. Bei dem Gerät kann es sich beispielsweise um eine physische oder logische Zugangskontrolle handeln. Abhängig vom Wert des Ansteuersignals A kann die Zugangskontrolle dann vorsehen, dass Zugang gewährt wird, oder nicht.

Es ist auch möglich, dass an Stelle des Aktors 10 beispielsweise ein medizinisches Diagnosesystem angesteuert wird, welches abhängig von dem Ansteuersignal A eine medizinische Diagnose ausgibt. Wenn es sich bei dem Sensor 30 um einen optischen Sensor handelt, der medizinische Bilder erfasst kann es sich bei dem Ansteuersignal A beispielsweise um eine ggf. mit Anmerkungen versehene semantische Segmentierung der Bilder handeln, in denen Bereiche, die für eine medizinische Diagnose als besonders relevant erscheinen, hervorgehoben sind. In diesem Fall bezeichnet das Bezugszeichen 40 ein Agentensteuerungssystem.

Das Aktorsteuerungssystem 40 empfängt das Ausgangssignal S des Sensors in einer optionalen Empfangseinheit 50, die das Ausgangssignal S in ein Datensignal x umwandelt (alternativ kann auch unmittelbar das Ausgangssignal S als Datensignal x übernommen werden). Das Datensignal x kann beispielsweise ein Ausschnitt oder eine Weiterverarbeitung des Ausgangssignals S sein. Das Datensignal x wird einem künstlichen neuronalen Netz 60 als Eingangssignal zugeführt. Die Struktur des künstlichen neuronalen Netzes wird durch Strukturparameter q charakterisiert, die in einem Strukturparameterspeicher Q abgespeichert sind. Das künstliche neuronale Netz 60 wird durch vorgebbare Parameter p parametriert, die in einem Parameterspeicher P abgespeichert sind.

Das Datensignal x ist ein zweidimensionales Bildsignal. Dessen Pixel können z.B. durch einen (Helligkeitskodierung) oder drei Zahlenwerte (RGB-Kodierung) charakterisiert sein.

Das künstliche neuronale Netz 60 ermittelt aus dem Eingangssignal x, hier: dem Bildsignal x, eine pixelweise semantische Segmentierung y als Ausgangssignal. Hierbei wird jedem Bereich des Bildsignals x ein semantischer Wert zugeordnet.

Das Ausgangssignal y, hier: die semantische Segmentierung y, wird einer Ausgabeeinheit 80 übermittelt, die hieraus das Ansteuersignal A ermittelt. D.h. abhängig von der semantischen Segmentierung y wird das Ansteuersignal A ermittelt. In anderen Ausführungsformen ist es auch möglich, dass die Ausgabeeinheit 80 das Ausgangssignal y unmittelbar als Ansteuersignal A übernimmt.

Das Aktorsteuerungssystem 40 umfasst in einer Ausführungsform einen Computer und ein maschinenlesbares Speichermedium (nicht dargestellt), auf dem ein Computerprogramm gespeichert ist, dass, wenn es vom Computer ausgeführt wird, diesen veranlasst, die beschriebenen Funktionalitäten des Aktorsteuerungssystems 40 auszuführen.

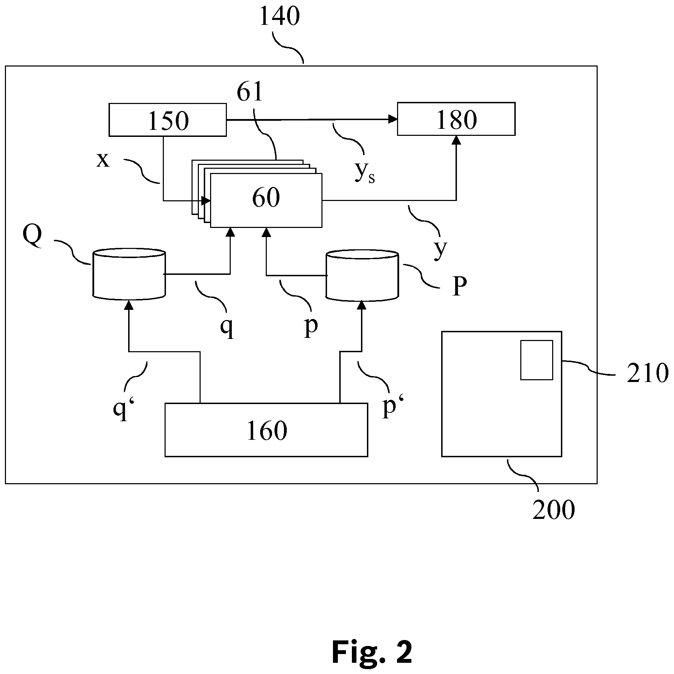

Figur 2 zeigt schematisch ein Ausführungsbeispiel eines Systems 140 zum Erzeugen des künstlichen neuronalen Netzes 60. Eine Trainingsdateneinheit 150 ermittelt geeignete Eingangsgrößen x, die dem künstlichen neuronalen Netz zugeführt werden. Beispielsweise greift die Trainingsdateneinheit 150 auf eine computerimplementierte Datenbank zu, in dem ein Satz von Trainingsdaten gespeichert ist, und wählt z.B. zufällig aus dem Satz von Trainingsdaten Eingangsgrö-βen x aus. Optional ermittelt die Trainingsdateneinheit 150 auch zu den Eingangsgrößen x zugeordnete gewünschte Ausgangsgrößen $y_s$, die einer Bewertungseinheit 180 zugeführt werden.

Das künstliche neuronale Netz x ist eingerichtet, aus den ihm zugeführten Eingangsgrößen x zugehörige Ausgangsgrößen y zu ermitteln. Diese Ausgangsgrö-βen y werden der Bewertungseinheit 180 zugeführt.

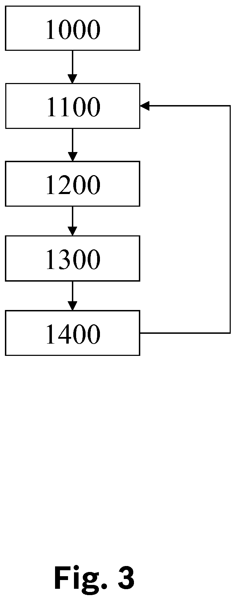

Eine Modifikationseinheit 160 ermittelt neue Strukturparameter q' und neue Parameter p' z.B. mit dem in Figur 3 illustrierten Verfahren und führt diese dem Strukturparameterspeicher Q und dem Parameterspeicher P zu, wo sie die Strukturparameter q und die Parameter p ersetzen. In der Modifikationseinheit 160 sind mögliche Variationen der Strukturparameter q, hinterlegt. Eine solche mögliche Variation der Strukturparameter q entspricht jeweils einer möglichen Kombination hinzufügbarer Module und Verbindungen zum künstlichen neuronalen Netz 60.

Gemäß eines Aspekts der Erfindung werden ausgehend von einer Ausgangsfassung des künstlichen neuronalen Netzes 60, dem Ausgangsnetz, über die Zuführung der Strukturparameter q und der Parameter p zum künstlichen neuronalen Netz 60 wird daher je eine mögliche Weiterbildung 61 des künstlichen neuronalen Netzes 60 geschaffen. Jeder dieser Weiterbildungen 61 können wie dem künstlichen neuronalen Netz 60 entsprechend Eingangsgrößen x zugeführt werden, sodass diese dann entsprechende Ausgangsgrößen y ermittelt.

Die Bewertungseinheit 180 kann beispielsweise mittels einer von den Ausgangsgrößen y und den gewünschten Ausgangsgrößen $y_s$ abhängigen Kostenfunktion (Englisch: loss *function*) eine Kenngröße $\mathcal{L}$ ermitteln, die eine Leistungsfähigkeit des künstlichen neuronalen Netzes 60 bzw. der Weiterbildungen 61 charakterisiert.

Bei fixierten Strukturparametern q können durch Variation der Parameter p das künstliche neuronale Netz 60 bzw. die Weiterbildungen 61 optimiert werden. Durch die sich dann ergebenden die Leistungsfähigkeit charakterisierenden Kenngrößen $\mathcal{L}$ kann diejenige Weiterbildung 61 ausgewählt werden, die am leistungsfähigsten ist.

Das System 140 kann beispielsweise ein Computer oder eine Mehrzahl von Computer umfassen und es umfasst im Ausführungsbeispiel ein maschinenlesbares Speichermedium 200, auf dem das Computerprogramm 210 gespeichert ist, das eingerichtet ist, das erfindungsgemäße Verfahren auszuführen.

Figur 3 zeigt in einem Flussdiagramm einen möglichen Ablauf eines Verfahrens zum Erzeugen eines künstlichen neuronalen Netzes 60.

Zunächst (1000) wird ein Ausgangsnetz 60 ermittelt (beispielsweise, indem die charakterisierenden Strukturparameter q aus einem Speicherbereich ausgelesen). Optional werden die ihm zugeordneten Parameter p trainiert.

Dann (1100) werden mittels eines (Pseudo-)zufallszahlengenerators eine mögliche Variation der Strukturparameter q gewählt, beispielsweise 8 oder 16 verschiedene (selbstverständlich ist diese Zahl frei wählbar, es hat sich jedoch gezeigt, dass eine Zahl im Bereich 8 bis 16 zu besonders guten Ergebnissen führt). D.h. es werden parallel eine Mehrzahl, beispielsweise 8 oder 16, möglicher Weiterbildungen 61 generiert, die sich jeweils aus dem Ausgangsnetz 60 durch das Hinzufügen einer Kombination aus Module und/oder Verbindungen ergeben, die eine oder mehrere der folgenden Kombinationen umfassen:

Eine erste mögliche Kombination ist das Hinzufügen einer linearen Schicht vor einer vorgebbaren (und vorzugsweise zufällig gewählten) Referenzschicht des Ausgangsnetzes 60. Die vorgebbare Referenzschicht kann auch der Ausgang des Ausgangsnetzes 60 sein. D.h. werden der Referenzschicht Eingangsgrößen $z_e$ zugeführt, die hieraus Ausgangsgrößen generiert, so wird vor dieser Schicht eine lineare Schicht eingefügt, die die Eingangsgrößen $z_e$ empfängt, hieraus transformierte Eingangsgrößen $z_e' = a*z_e + b$ (mit frei wählbaren Parametern a, b) ermittelt, und diese transformierten Eingangsgrößen $z_e'$ an Stelle der Eingangsgrößen $z_e$ der Referenzschicht zuführt. Vorzugsweise wird b=0 und a=1 gewählt.

Eine zweite mögliche Kombination ist das Hinzufügen einer nichtlinearen Schicht vor der vorgebbaren Referenzschicht. Hierbei wird eine idempotente Funktion h der Referenzschicht identifiziert (beispielsweise kann identifiziert werden, dass die Eingangsgröße $z_e$ der Funktion relu(x) = max(0,x) zugeführt wird). Parameter, die die hinzuzufügende idempotente Funktion h charakterisieren, werden vorzugsweise gleich den entsprechenden Parametern der in der Referenzschicht vorhandenen idempotenten Funktion gewählt, der die Ausgangsgröße der hinzuzufügenden idempotenten Funktion h zugeführt wird. Alternativ kann auch eine nichtlineare Funktion eingefügt werden, ohne das notwendigerweise in der Referenzschicht eine idempotente Funktion identifiziert wurde. Dann kann die hinzuzufügende derart gewählt sein (z.B. als konvexe Linearkombination), dass sie für einen bestimmten Parameter die Identität ergibt. D.h. es werden der Referenzschicht an Stelle der Eingangsgrößen $z_e$ transformierte Eingangsgrößen $z_e'$ =a*h($z_e$) + (1-a)*$z_e$ zugeführt. Vorzugsweise wird initial a=0 gewählt.

Eine dritte mögliche Kombination ist das Hinzufügen einzelner Neurone zur vorgebbaren Referenzschicht. Hierbei werden die Parameter, die den funktionalen Zusammenhang des Eingangs der Eingangsgrößen in eine Ausgangsgröße der Referenzschicht charakterisieren vorzugsweise so gewählt, dass die funktionale Abhängigkeit der Ausgangsgröße der Referenzschicht von der Eingangsgröße unverändert bleibt.

Eine vierte mögliche Kombination ist das Hinzufügen einzelner Verbindungen zur vorgebbaren Referenzschicht. Beispielsweise kann eine Verbindung parallel zu einer bereits bestehenden Verbindung hinzugefügt werden. Hierbei werden die Parameter, die den funktionalen Zusammenhang des Eingangs der Eingangsgrößen in eine Ausgangsgröße der Referenzschicht charakterisieren vorzugsweise so gewählt, dass die funktionale Abhängigkeit der Ausgangsgröße der Referenzschicht von der Eingangsgröße unverändert bleibt.

Eine fünfte mögliche Kombination ist das Hinzufügen einer Sprungverbindung zwischen zwei (vorzugsweise zufällig gewählten) vorgebbaren Referenzschichten, also von einer vorgebbaren Ausgangsschicht in eine vorgebbare Zielschicht. Eine solche Sprungverbindung kann entweder derart gewählt werden, dass ihre Ausgangsgröße in der Zielschicht zu einer anderen Ausgangsgröße hinzuaddiert wird (in diesem Fall werden die Parameter der Sprungverbindung vorzugsweise derart gewählt, dass das Gewicht der Sprungverbindung gleich 0 und das Gewicht der hinzuaddierten Ausgangsgröße gleich 1 gewählt wird).

Eine sechste Möglichkeit ist analog zu fünften Möglichkeit mit dem Unterschied, dass die Sprungverbindung derart gewählt wird, dass ihre Ausgangsgröße in der Zielschicht zu einer anderen Ausgangsgröße konkateniert wird (in diesem Fall werden Gewichte, die die konkatenierten Komponenten gewichten, vorzugsweise gleich 0 gewählt).

Eine siebte Möglichkeit ist das Hinzufügen eines Normierungsmoduls hinter einer vorgebbaren (und vorzugsweise zufällig gewählten) Referenzschicht des Ausgangsnetzes 60. Abhängig von einer statistischen Verteilung von Ausgangsgrößen $z_r$ der Referenzschicht werden statistische Parameter $\mu$, $\sigma$ ermittelt, die beispielsweise einem Mittelwert bzw. einer geschätzten Standardverteilung der gewählten Parameter entsprechen können. Diese Parameter können beispielsweise über Zeilen und/oder Spalten einer Schicht gemittelt ermittelt werden, oder auch über die Ausgangsgrößen der Referenzschicht über einem Stapel an Eingangsgrößen x der Weiterbildung 61. Eine Ausgangsgröße $y_r$ des Normierungsmoduls kann dann gewählt werden als

$$y_r = \gamma \cdot \frac{z_r - \mu}{\sqrt{\sigma^2 + \epsilon}} + \beta.$$

Der Parameter $\varepsilon$ kann hierbei aus Gründen der numerischen Stabilität auf einen fest gewählten kleinen Wert gesetzt werden, z.B. $\varepsilon = 10^{-10}$. Die Parameter $\gamma, \beta$

werden vorzugsweise gewählt als

$$\gamma = \sqrt{\sigma^2 + \epsilon}$$
$$\beta = \mu.$$

Anschließend (1200) werden die erzeugten möglichen Weiterbildungen 61 trainiert. Hierzu werden jeder der erzeugten möglichen Weiterbildungen 61 in Trainings-Epochen Eingangsgrößen x zugeführt, und abhängig von den aus den Eingangsgrößen x ermittelten Ausgangsgrößen y die die Leistungsfähigkeit charakterisierende Kenngröße $\mathcal{L}$ ermittelt. Die Parameter p werden nun sukzessive iteriert variiert, mit $p_0 = p$, $p_{t+1} = p_t - \eta_t \nabla_p \mathcal{L}$. Hierbei ist $\eta_t$ der Parameter, der die Lernrate charakterisiert. Er wird vorzugsweise mit steigendem Iterationsindex t fallend gewählt, z.B. proportional zu ( $1 + \cos(\frac{t}{T}\pi)$ ) mit der vorgebbaren Gesamtzeit T. Diese Iteration wird solange durchgeführt, bis die Parameter p bei einem Index $t_c$ konvergiert sind. Dann wird der neue Parameter p' = $p_{tc}$ gewählt.

Dann (1300) werden den erzeugten und trainierten möglichen Weiterbildungen 61 vorgebbare Eingangsgrößen zugeführt, und die sich ergebende die Leistungsfähigkeit charakterisierende Kenngröße $\mathcal{L}$ für jede der möglichen Weiterbildungen 61 ermittelt. Es ist auch denkbar, dass eine sich im Verlauf des Trainings in Schritt (1200) ermittelte Kenngröße $\mathcal{L}$ herangezogen wird.

Schließlich (1400) wird abhängig von den ermittelten Kenngrößen $\mathcal{L}$ diejenige Weiterbildung 61 ausgewählt, deren Kenngröße $\mathcal{L}$ am besten ist, z.B. am größten.

Es kann nun geprüft werden, ob die ausgewählte Weiterbildung 61 eine hinreichend deutlich bessere Kenngröße $\mathcal{L}$ erreicht hat, als das Ausgangsnetz 60. Ist dies nicht der Fall, wird das Verfahren beendet, und die ausgewählte Weiterbildung 61 (alternativ das aktuelle Ausgangsnetz 60) ergibt das erzeugte künstliche neuronale Netz.

Andernfalls ersetzt die ausgewählte Weiterbildung 61 ersetzt nun das aktuelle Ausgangsnetz 60, d.h. die der ausgewählten Weiterbildung 61 zugeordneten Strukturparameter q' und die ihr zugeordneten ermittelten Parameter p' ersetzen die Strukturparameter q und die Parameter p. Dann verzweigt das Verfahren zurück zu Schritt 1100.

Es sei angemerkt, dass mit Erzeugen des künstlichen neuronalen Netzes 60 auch ein entsprechendes Aktor- bzw. Agentensteuerungssystem 40 erzeugt werden kann, in dem das künstliche neuronale Netz 60 zum Einsatz kommt. Beispielsweise können alle anderen Komponenten unveränderbar vorgegeben werden und lediglich das enthaltene künstliche neuronale Netz 60 erzeugt wird.

Das Verfahren kann als Computerprogramm also Software oder in Hardware oder einer Mischform aus Hardware und Software implementiert sein.

**Patentansprüche**

1.  Computerimplementiertes Verfahren zum automatischen Erzeugen eines künstlichen neuronalen Netzes (60) zur pixelweisen semantischen Segmentierung eines Bildsignals, welches Module und Verbindungen, die diese Module verknüpfen, umfasst,

    wobei das derartig erzeugte künstliche neuronale Netz eingerichtet ist, um aus einem Eingangssignal ein zugehöriges Ausgangssignal zu ermitteln,
    wobei das Eingangssignal ein zweidimensionales Bildsignal ist und wobei das Ausgangssignal eine pixelweise semantische Segmentierung des Eingangssignals ist,
    wobei das Verfahren die folgenden Schritte umfasst:

       wobei sukzessive Module und/oder Verbindungen zu einem aktuellen Ausgangsnetz (60) hinzugefügt werden,
       wobei hinzuzufügende Module und/oder Verbindungen aus einer vorgebbaren Mehrzahl möglicher hinzufügbarer Module und Verbindungen zufällig ausgewählt werden,
       und wobei eine Mehrzahl von möglichen Weiterbildungen (61) des aktuellen Ausgangsnetzes (60) jeweils durch Hinzufügen hinzuzufügender Module und/oder Verbindungen zum Ausgangsnetz erzeugt werden,
       und wobei beim Hinzufügen der jeweiligen Module und/oder Verbindungen vorgebbare Parameter (p), die die jeweiligen hinzuzufügenden Module und/oder Verbindungen charakterisieren, so gewählt werden, dass das Ausgangsnetz (60), dem die jeweiligen hinzuzufügenden Module und/oder Verbindungen hinzugefügt werden, für jede mögliche Eingangsgröße (x) jeweils vor und nach dem Hinzufügen der jeweiligen hinzuzufügenden Module und/oder Verbindungen unveränderte Ausgangsgrößen (y) liefert, und wobei dann eine der Weiterbildungen (61) aus der Mehrzahl möglicher Weiterbildungen (61) ausgewählt wird, um als aktuelles Ausgangsnetz (60) in einem nächsten Durchlauf des Verfahrens zu dienen, wobei dasjenige aktuelle Ausgangsnetz (60), das als Ausgangspunkt für ein erstmaliges Hinzufügen von Modulen und/oder Verbindungen dient, vor dem erstmaligen Hinzufügen von Modulen und/oder Verbindungen mit einem initialen Trainingsdatensatz trainiert wird, und wobei das künstliche neuronale Netz trainiert wird, um basierend auf Sensordaten einen Aktor zu steuern.

2. Verfahren nach Anspruch 1, wobei die möglichen Weiterbildungen (61) des aktuellen Ausgangsnetzes (60) jeweils mit einem Trainingsdatensatz trainiert werden, bevor dann die eine der Weiterbildungen aus der Mehrzahl möglicher Weiterbildungen ausgewählt wird, um als aktuelles Ausgangsnetz (60) im nächsten Durchlauf des Verfahrens zu dienen.

3. Verfahren nach Anspruch 2 wobei die Weiterbildungen des Ausgangsnetzes (60) jeweils mit einem Gradientenabstiegsverfahren trainiert werden, wobei ein Parameter ($\eta$), der eine Lernrate des Gradientenabstiegsverfahrens charakterisiert, mit zunehmender Anzahl durchgeführter Trainingsepochen fallend gewählt wird.

4. Verfahren nach Anspruch 3, wobei der fallende Verlauf des Parameters ($\eta$), der die Lernrate charakterisiert, mittels einer trigonometrischen Funktion charakterisiert ist.

5. Verfahren nach einem der vorherigen Ansprüche, wobei die vorgebbare Mehrzahl möglicher Module und/oder Verbindungen ein Normierungsmodul und/oder eine Sprungverbindung (Englisch: *skip connection*) und/oder ein Modul, das eine nicht-lineare Funktion beinhaltet, umfasst, wobei die nicht-lineare Funktion für mindestens einen Wert eines ihr Verhalten charakterisierenden Parameters (p) idempotent ist.

6. Verfahren nach Anspruch 5, wobei die vorgebbare Mehrzahl möglicher Module und/oder Verbindungen das Normierungsmodul und die Sprungverbindung und das die nicht-lineare Funktion beinhaltende Modul und ein eine lineare-Funktion beinhaltendes Modul und ein Modul beinhaltet, das eine bestehende lineare Schicht durch Hinzufügen von Einheiten bzw. Kanälen verbreitert und ein Modul beinhaltet, das eine lineare Schicht durch ein Duplizieren dieser linearen Schicht verbreitert.

7. Computerprogramm umfassend Befehle, die bei der Ausführung durch einen Computer diesen veranlassen, das Verfahren nach einem der Ansprüche 1 bis 6 auszuführen.

8. Maschinenlesbares Speichermedium (200), auf dem das Computerprogramm nach Anspruch 7 gespeichert ist.

9. System (140), das eingerichtet ist, das Verfahren nach einem der Ansprüche 1 bis 6 auszuführen.

**Claims**

1. Computer-implemented method for automatically generating an artificial neural network (60) for the pixel-wise semantic segmentation of an image signal, comprising modules and connections linking these modules,

   wherein the artificial neural network generated in this way is configured to determine an associated output signal from an input signal, wherein the input signal is a two-dimensional image signal and wherein the output signal is a pixel-wise semantic segmentation of the input signal, wherein the method comprises the following steps:

   wherein successive modules and/or connections are added to a current starting network (60), wherein modules and/or connections to be added are randomly selected from a predefinable plurality of possible addable modules and connections, and wherein a plurality of possible developments (61) of the current starting network (60) are each generated by adding modules and/or connections to be added to the starting network, and wherein, when adding the respective modules and/or connections, predefinable parameters (p) that characterize the respective modules and/or connections to be added are selected such that the starting network (60) to which the respective modules and/or connections to be added are added delivers unchanged output variables (y) for each possible input variable (x) in each case before and after the addition of the respective modules and/or connections to be added, and wherein one of the developments (61) is then selected from the plurality of possible developments (61) to serve as the current starting network (60) in a next run of the method, wherein the current starting network (60) that serves as the starting point for a first-time addition of modules and/or connections is trained with an initial training dataset before the first-time addition of modules and/or connections, and wherein the artificial neural network is trained to control an actuator based on sensor data.

2. Method according to Claim 1, wherein the possible developments (61) of the current starting network (60) are each trained with a training dataset before one of the developments is then selected from the plurality of possible developments to serve as the current starting network (60) in the next run of the method.

3. Method according to Claim 2, wherein the developments of the starting network (60) are each trained with a gradient descent method, wherein a parameter ($\eta$), which characterizes a learning rate of the gradient descent method, is selected so as to fall as the number of training epochs that have been performed increases.

4. Method according to Claim 3, wherein the falling characteristic of the parameter ($\eta$), which characterizes the learning rate, is **characterized by** way of a trigonometric function.

5. Method according to one of the preceding claims, wherein the predefinable plurality of possible modules and/or connections comprises a normalization module and/or a skip connection and/or a module containing a non-linear function, wherein the non-linear function is idempotent for at least one value of a parameter (p) that characterizes its behavior.

6. Method according to Claim 5, wherein the predefinable plurality of possible modules and/or connections includes the normalization module and the skip connection and the module containing the non-linear function and a module containing a linear function and a module that broadens an existing linear layer by adding units or channels and a module that broadens a linear layer by duplicating this linear layer.

7. Computer program comprising instructions that, when executed by a computer, cause said computer to carry out the method according to one of Claims 1 to 6.

8. Machine-readable storage medium (200) on which the computer program according to Claim 7 is stored.

9. System (140) configured to carry out the method according to one of Claims 1 to 6.

**Revendications**

1. Procédé mis en oeuvre par ordinateur destiné à produire automatiquement un réseau neuronal artificiel (60) permettant la segmentation sémantique pixel par pixel d'un signal d'image, lequel comprend des modules et des connexions qui relient ces modules,

le réseau neuronal artificiel ainsi produit étant conçu pour déterminer à partir d'un signal d'entrée un signal de sortie associé,
le signal d'entrée étant un signal d'image bidimensionnel et le signal de sortie étant une segmentation sémantique pixel par pixel du signal d'entrée,
le procédé comprenant les étapes suivantes :

des modules successifs et/ou des connexions successives sont introduits dans un réseau de sortie actuel (60),
des modules et/ou des connexions à introduire sont sélectionnés aléatoirement à partir d'une pluralité prédéfinissable de modules et de connexions possibles pouvant être introduits,
et une pluralité de configurations dérivées possibles (61) du réseau de sortie actuel (60) sont respectivement produites en introduisant des modules et/ou des connexions à introduire dans le réseau de sortie,
et, lors de l'introduction des modules et/ou des connexions respectifs, des paramètres prédéfinissables (p) caractérisant les modules et/ou les connexions respectifs à introduire sont sélectionnés de telle sorte que le réseau de sortie (60) dans lequel les modules et/ou les connexions respectifs à introduire sont introduits, fournisse pour chaque grandeur d'entrée possible (x) des grandeurs de sortie inchangées (y) respectivement avant et après l'introduction des modules et/ou des connexions respectifs à introduire, et l'une des configurations dérivées (61) étant alors sélectionnée parmi la pluralité de configurations dérivées possibles (61) afin de servir de réseau de sortie actuel (60) lors d'un déroulement suivant du procédé, le réseau de sortie actuel (60) qui sert de point de départ pour une première introduction de modules et/ou de connexions étant entraîné avec un jeu de données d'apprentissage initial avant la première introduction de modules et/ou de connexions, et le réseau neuronal artificiel étant entraîné afin de commander un actionneur sur la base de données de capteur.

2. Procédé selon la revendication 1, dans lequel les configurations dérivées possibles (61) du réseau de sortie actuel (60) sont respectivement entraînées avec un jeu de données d'apprentissage avant que l'une des configurations dérivées ne soit ensuite sélectionnée parmi la pluralité de configurations dérivées possibles pour servir de réseau de sortie actuel (60) lors du déroulement suivant du procédé.

3. Procédé selon la revendication 2, dans lequel les configurations dérivées du réseau de sortie (60) sont respectivement entraînées à l'aide d'un procédé de descente de gradient, un paramètre ($\eta$) qui caractérise un taux d'apprentissage du procédé de descente de gradient étant sélectionné de manière décroissante lorsque le nombre d'époques d'apprentissage exécutées augmente.

4. Procédé selon la revendication 3, dans lequel la courbe descendante du paramètre ($\eta$) qui caractérise le taux d'apprentissage est caractérisée au moyen d'une fonction trigonométrique.

5. Procédé selon l'une des revendications précédentes, dans lequel la pluralité prédéfinissable de modules et/ou de connexions possibles comprend un module de normalisation et/ou une connexion par saut (anglais : *skip connection*) et/ou un module qui comprend une fonction non linéaire, la fonction non linéaire étant idempotente pour au moins une valeur d'un paramètre (p) caractérisant son comportement.

6. Procédé selon la revendication 5, dans lequel la pluralité prédéfinissable de modules et/ou de connexions possibles comprend le module de normalisation et la connexion par saut et le module contenant la fonction non linéaire et un module contenant une fonction linéaire et un module qui élargit une couche linéaire existante en introduisant des unités ou des canaux, et un module qui élargit une couche linéaire en dupliquant cette couche linéaire.

7. Programme informatique comprenant des instructions qui, lorsqu'elles sont exécutées par un ordinateur, amènent ce dernier à mettre en oeuvre le procédé selon l'une des revendications 1 à 6.

8. Support de stockage lisible par machine (200), sur lequel est enregistré le programme informatique selon la revendication 7.

9. Système (140), lequel est conçu pour mettre en oeuvre le procédé selon l'une des revendications 1 à 6.

**Fig. 1**

**Fig. 2**

```
┌──────────┐
│   1000   │
└──────────┘
      │
      ▼
┌──────────┐◄─────────┐
│   1100   │          │
└──────────┘          │
      │               │
      ▼               │
┌──────────┐          │
│   1200   │          │
└──────────┘          │
      │               │
      ▼               │
┌──────────┐          │
│   1300   │          │
└──────────┘          │
      │               │
      ▼               │
┌──────────┐          │
│   1400   │──────────┘
└──────────┘
```

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202017102238 U1

**In der Beschreibung aufgeführte Nicht-Patentliteratur**

- **HAN CAI ; TIANYAO CHEN ; WEINAN ZHANG ; YONG YU ; JUN WANG.** Reinforcement Learning for Architecture Search by Network Transformation. *arXiv:1707.04873v1,* 2017

- Evolving Deep Neural Networks. **RISTO MIIKKULAINEN et al.** ARXIV.ORG. CORNELL UNIVERSITY LIBRARY, 02. Marz 2017
- **ILYA LOSHCHILOV et al.** SGDR: Stochastic Gradient Descent with Warm Restarts. *arXiv.org,* 03. Mai 2017, 1-16, https://arxiv.org/abs/1608.03983